# EUROPEAN PATENT APPLICATION

(11) **EP 0 993 919 A2**
(43) Date of publication of application: **19.04.2000**
(21) Application number: 99307894.8
(22) Date of filing: 07.10.1999
(51) Int. Cl.: B27C 1/10, B27F 5/02

(54) **Hand operated multi purpose power tool**

(30) Priority: 07.10.1998 GB 9821827; 30.01.1999 GB 9901987
(71) Applicant: Refson, Neil, Aberdeen AB2 1DQ (GB)
(72) Inventor: Refson, Neil, Aberdeen AB2 1DQ (GB)
(74) Representative: McKechnie, Neil Henry

(57) **Abstract**

A multi-purpose single hand operated power tool which, using different mountable heads, can be used for cutting, sawing, sanding, planing and similar operations. The power tool has a means for gripping a workpiece that can be operated simply by the motion of the tool against the workpiece, a dust collector and an adjustable depth setting with depth gauge. The sole plate is formed in two parts which move together to cover the tool bit when the power tool is held away from the workpiece. The front part of the sole plate is pushed down by the action of plunging the power tool towards the workpiece but, when being used as planer, the rear plate is pushed only as far as is appropriate for planer functionality. The sole plate is biased at the front to prevent sticking or fouling when operated at the edge of a workpiece.

## Description

This invention relates to a range of hand-operated power tools that may be incorporated into one power tool.

A large number of hand-operated power planers are available. They are all of a similar type, which resembles the non-powered hand plane known as the smoothing plane. The resemblance is due to the long base plate which they all have.

The size, weight and exposed blades of existing power planers causes the following problems:-

They are difficult to use in tight situations or at awkward angles, which are often encountered. For example when repairing or modifying wooden structures.

A high level of skill and strong arms are required for safe operation.

The exposed blades represent a danger to the operator.

The hand-operated power tools designed to cut mouldings in wood, are known as routers. They require two hands and a high level of skill to use.

They also have exposed blades, which represent a danger to the operator.

A known type of grinding tool is an angle grinder. An angle grinder is excellent at removing large amounts of material but leaves a very poor finish, especially on flat surfaces. There is no method of controlling the amount of material removed, or accurate method for controlling where it is removed.

There are many types of hand-operated power sanders, or sanding attachments for hand-operated power tools available. The only part of all of these tools to make contact with the work surface is the abrasive. Therefore there is no method for controlling the amount and position of material to be removed, except by operator skill. The result is that it is very difficult to make a flat surface which is square with sharp edges; especially when sanding edges.

The are several different types of tools which are capable of cutting with an abrasive cutting disc. They are all difficult to control and require two hands to operate, except the tool disclosed in European Patent Application No. 95934753.5. This earlier tool functions in a similar way to the tool disclosed in the present application but is only configured to operate with an abrasive cutting disk.

When using a wire brush with an angle grinder, lots of sharp steel strands are thrown off at high speed, all people in the vicinity should therefore have full face protection. This tool requires a lot of strength to operate, and there is a risk of it spinning off and contacting the operator when used on uneven surfaces. A wire brush attachment for a drill poses less risk, but is far less effective due to its low speed.

Various low power, hand-operated model making tools exist. The use of these tools is limited to small jobs, with little material removal required.

It is an object of the present invention to provide a hand operated multi-purpose power tool which overcomes the disadvantages of the described prior art.

According to the present invention there is provided a hand operated power tool for performing operations on a workpiece; the tool being suitable for use with one hand; the tool comprising a handle, a motor, a sole plate and a mounting means for drivably attaching a tool bit; the handle extending from a mounting means and being disposed at an acute angle to a sole plate; characterized in that the mounting means is arranged to receive any one of a range of interchangeable tool bits configured for different tasks.

Preferably, the range of interchangeable tool bits comprises bits configured to operate as planers, moulders, grinders, abrasive disk cutters, drum sanders and wire brushes.

Preferably also, the sole plate is movable on the power tool between a first position in which the tool bit extends beyond the plane defined by the working surface of the sole plate in operation and a second position in which the tool bit does not extend beyond the plane defined by the working surface of the sole plate in operation, wherein the sole plate further comprises a means for biasing the sole plate towards the second position, said means for biasing the sole plate being positioned towards the front of the power tool.

The sole plate may further comprises a rear section which moves with the front plate except that when the sole plate is moved towards the first position, the rear section will move only until it is level with the tip of the tool bit.

Preferably, there is provided a depth adjustment means for adjusting the extent to which the tool bit can extend beyond the working surface of the sole plate in operation; wherein said depth adjustment means is associated with the means for biasing the sole plate.

Preferably, the hand operated power tool further comprises a gripping means for a workpiece, said gripping means comprising two fences, a means for moving the two fences apart in order to accommodate the workpiece and a means for urging the fences to grip the workpiece, wherein the gripping means may be operated by pressing the power tool against the workpiece.

More preferably, the means for moving the two fences apart comprises a plunger that can move in to or out from the tool and which can be moved in by pressing the power tool against the workpiece; and the means for urging the fences to grip the workpiece comprises a means for biasing the plunger by pushing it out; wherein the motion of the plunger is coupled to the motion of the two fences such that inward motion of the plunger moves the fences apart in order to accommodate the workpiece and outwards movement of the plunger moves the fences together in order to grip the workpiece.

More preferably, said fences may be locked in place by the action of pressing the power tool down on the workpiece.

Preferably, the motor is mounted within the handle.

The hand operated power tool may further include a dust extraction means.

The hand operated power tool may further comprise a means for attachment of an auxiliary handle to provide additional means of supporting the power tool.

Embodiments of the present invention, will now be described by way of example with reference to the accompanying drawings, in which: -
Figure 1 shows the right side of the tool;
Figure 2 shows the left side of the tool;
Figure 3 shows the right side of the tool with an alternative guard;
Figure 4 shows the left side of the tool with an alternative guard;
Figure 5 shows internal details of the right side with some drive components removed;
Figure 6 shows internal details of the right side;
Figure 7 shows the left side main case moulding;
Figure 8 shows the gearbox side moulding;
Figure 9 shows the right side main case moulding;
Figure 10 shows the left and right output shaft brackets;
Figure 11 shows the planer cutter block;
Figure 12 shows the planer cutter block with blades fitted;
Figure 13 shows the planer cutter block with the pulley fitted;
Figure 14 shows a sectional view of the planer cutter block in position in the main case;
Figure 15 shows a sectional view of the planer cutter block;
Figure 16 shows the cutter block-retaining bolt;
Figure 17 shows a rear view of the tool;
Figure 18 shows a sectional rear view;
Figure 19 shows a sectional rear view;
Figure 20 shows a sectional rear view;
Figure 21 shows a side view of the general-purpose guard;
Figure 22 shows an enlarged partially sectioned view of the general-purpose guard;
Figure 23 shows an enlarged partially sectioned view of the general-purpose guard;
Figure 24 shows a front view of the general-purpose guard;
Figure 25 shows a plan view of the general-purpose guard;
Figure 26 shows a plan view of the general-purpose guard with some parts omitted;
Figure 27 shows the side view of the base plate casting;
Figure 28 shows the plan view of the base plate casting;
Figure 29 shows the underneath view of the base plate casting;
Figure 30 shows the guard-retaining clip;
Figure 31 shows the guard side mouldings;
Figure 32 shows the rear sole plate and fittings;
Figure 33 shows the guard plunger/fence lock;
Figure 34 shows the fence-opening plunger;
Figure 35 shows the left and right fences;
Figure 36 shows the fence retaining fittings and bearings;
Figure 37 shows the guard bearings;
Figure 38 shows the thin material adapters;
Figure 39 shows the thin material adapters in place;
Figure 40 shows the moulding block;
Figure 41 shows sectional views of the moulding block;
Figure 42 shows the cutter alignment tool;
Figure 43 shows a selection of moulding cutters;
Figure 44 shows the grinding block and wheel;
Figure 45 shows the grinding wheel;
Figure 46 shows the grinding block;
Figure 47 shows the cutting disk and method of attachment;
Figure 48 shows the assembled drum-sanding block;
Figure 49 shows the drum-sanding block;
Figure 50 shows the drum sanding tube rubber backing;
Figure 51 shows the drum sanding tube;
Figure 52 shows the planer plain guard;
Figure 53 shows the moulder plain guard;
Figure 54 shows the moulder general purpose guard;
Figure 55 shows the cutting disk guard;
Figure 56 shows the non-adjustable plain guard fences;
Figure 57 shows the adjustable plain guard fences;
Figure 58 shows the thin material adapters for the plain guard fences;
Figure 59 shows the front view of the plain guard with adjustable fences fitted;
Figure 60 shows a plan view of the vee-block attachment;
Figure 61 shows a front view of the vee-block attachment on the guard;
Figure 62 shows the populated printed circuit board;
Figure 63 shows the switch actuator;
Figure 64 shows the switch actuator attached to the switch;
Figure 65 shows the depth adjuster parts;
Figure 66 shows the wire brush;
Figure 67 shows a small diameter circular saw blade;
Figure 68 shows a right side view, of a variant of the tool, fitted with a circular saw blade;
Figure 69 shows a left side view, of a variant of the tool, fitted with a circular saw blade;
Figure 70 shows a sectional right side view, of a variant of the tool, fitted with a circular saw blade; and
Figure 71 shows an inside, left hand casing, of a variant of the tool, fitted with a circular saw blade.

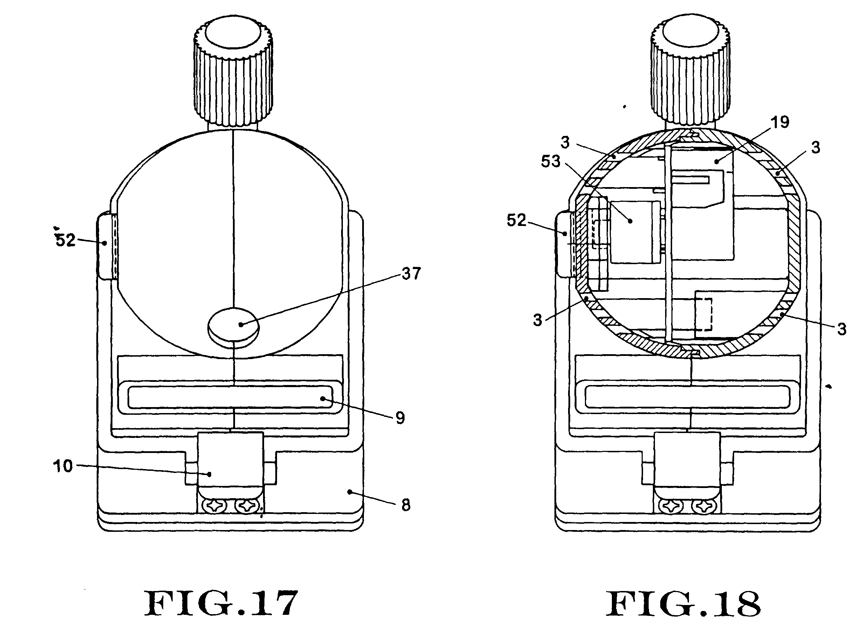

When the terms left or right are used throughout this description, it is assumed that the tool is being viewed from behind, looking along the direction of cut as in figure 17. Some features have been omitted from certain drawings for clarity.

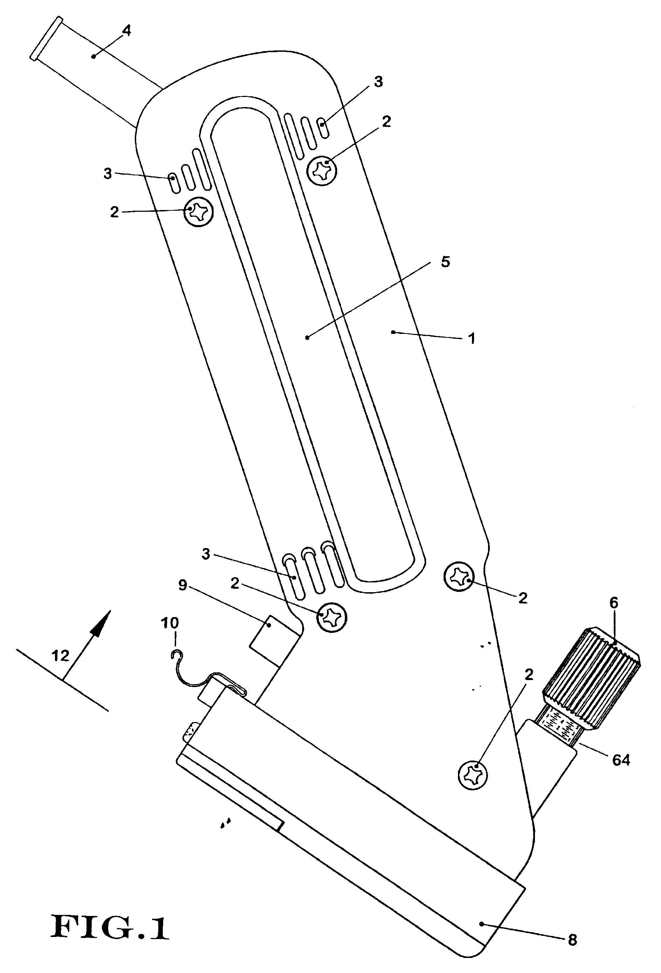

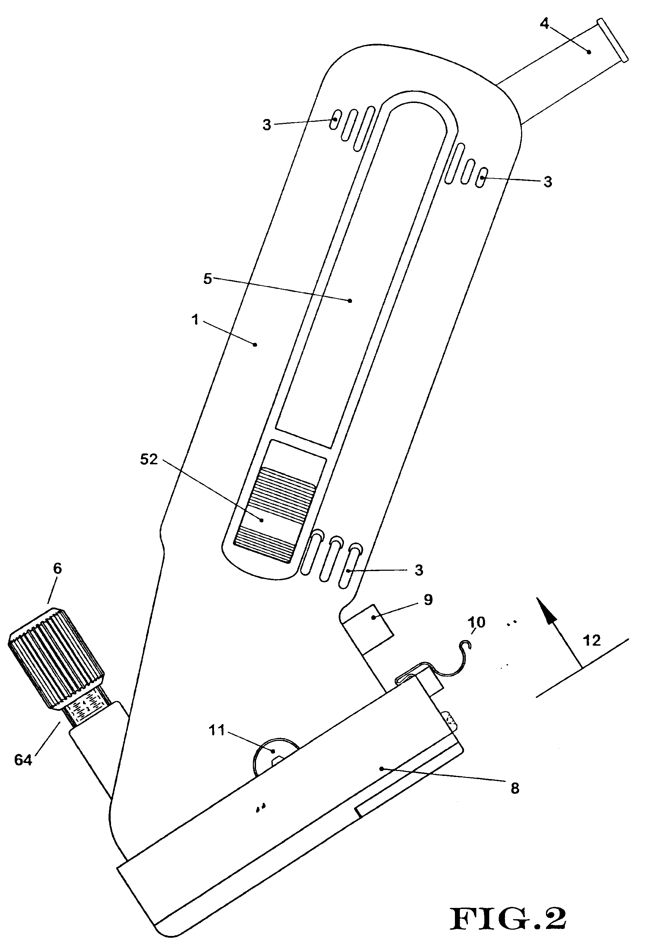

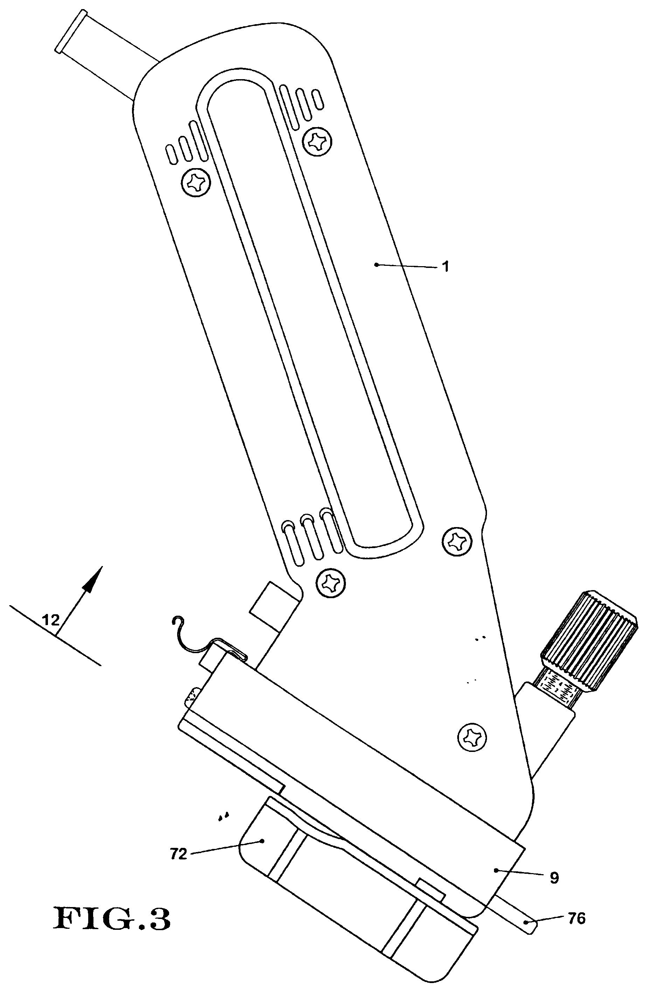

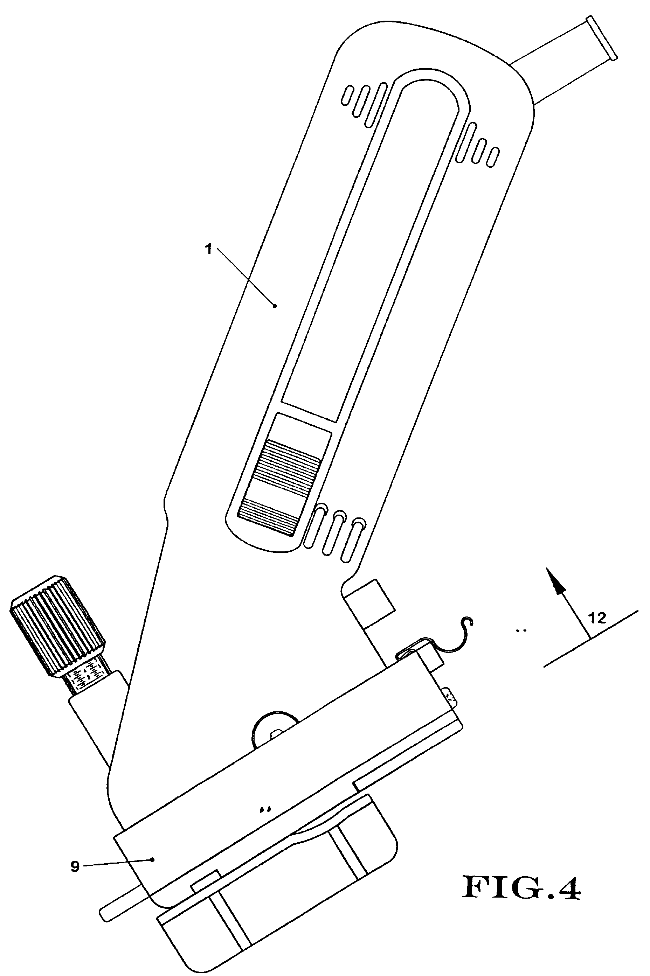

A hand operated multi-purpose power tool is shown, with the plain planer guard fitted, in figures 1 and 2. Figures 3 and 4 show the tool with the general purpose guard fitted. Arrow 12 points vertical to show the orientation of the tool when in use.

In the above figures the main case 1, acts as the handle. It is constructed, using plastic injection mouldings, in two halves, which are fastened using screws 2. Vents 3, are provided for motor cooling. The power cable enters through the strain relief 4. A flat surface 5, on each side of the main case, is for attaching name and specification labels. The depth adjuster screw 6, effects the amount of blade exposure by acting on the guard. The set depth is read off from scale 64. The guards 8 and 9 are described in detail later. The guard is retained in position by clip 10.

The waste, dust or chips, is expelled through nozzle 9. It can be collected using an industrial vacuum dust extractor or a domestic vacuum cleaner using an appropriate adapter (not shown). A small dust collection bag may also be attached to the left or right of the tool using a right angled adapter (not shown). The adapter and bag are of a similar design to items well known in the power tool industry. If no dust collection facility is used, the waste is expelled onto the work surface behind the cutter, so as not to effect the operation of the tool.

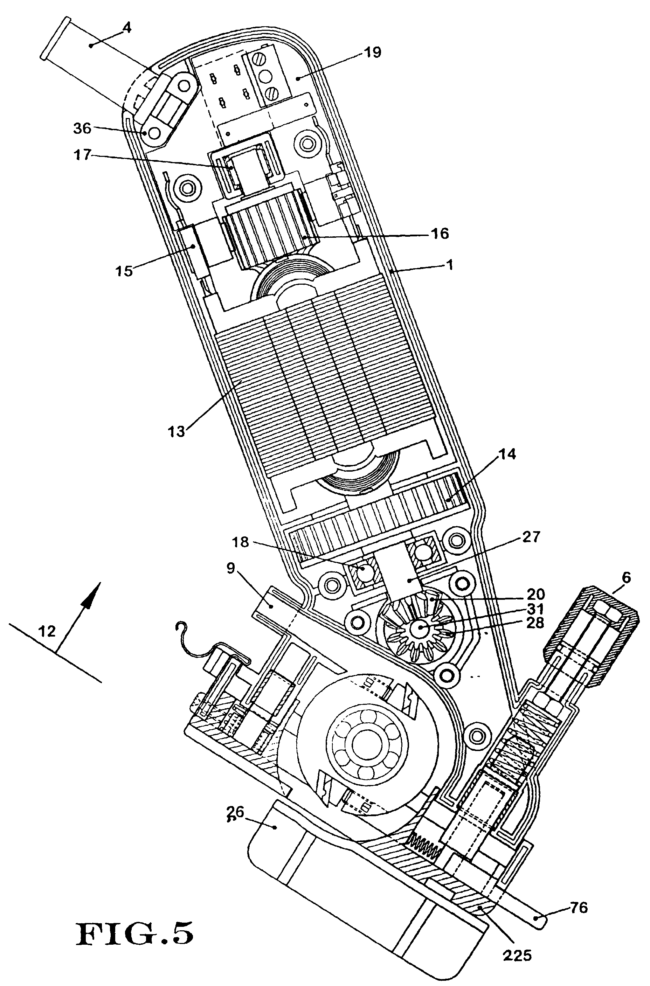

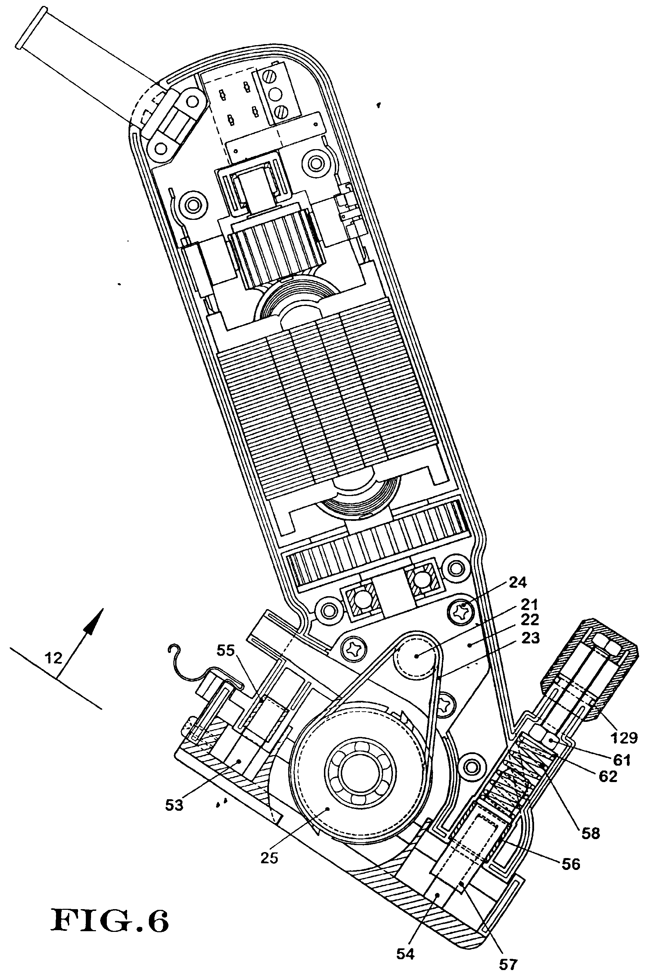

Figure 6 shows the interior of the tool. The near side main case half and the near side guard half have been removed. The base plate 225, has been sectioned. Figure 5 has the same exposure plus the belt 23, pulleys 21 and 25, and the gearbox side 22, removed.

The motor 13, is housed within handle 1. The brush assemblies 15, act on the armature 16. The rear motor bearing 17, is of the needle roller type. The front motor bearing 18, is of the deep groove ball bearing type. Fan 14, for cooling the motor is attached to the motor shaft 27. The electrical components and circuit board 19, are described later.

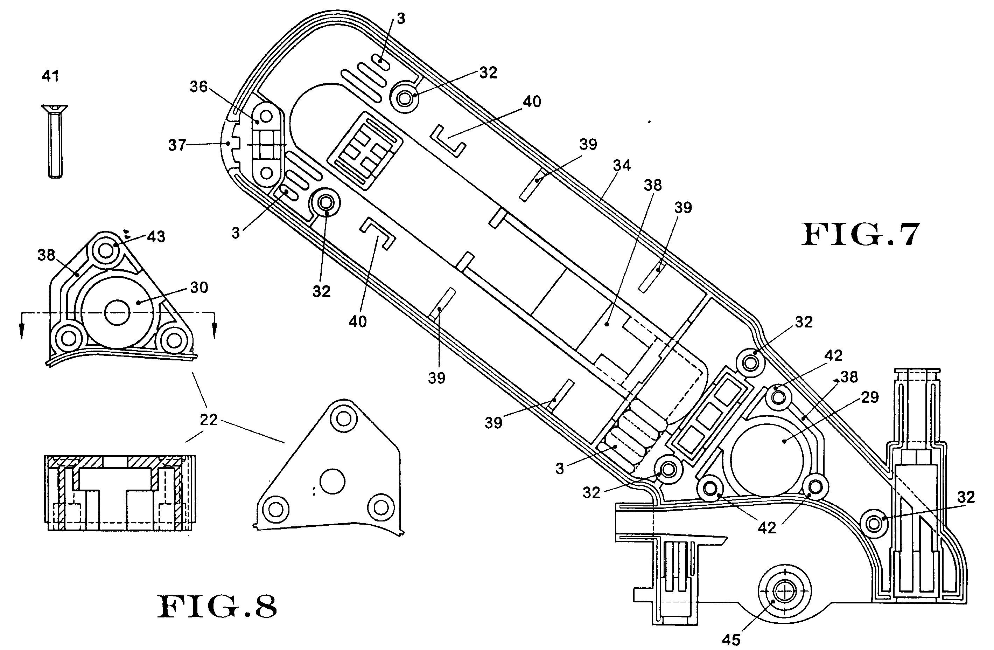

A pair of bevel gears 20 and 28, are attached to the motor shaft 27. The driven gear 28, is supported on a shaft 31, perpendicular to the motor shaft and located using two deep groove ball bearings (not shown). The left ball bearing is housed in the left main case 29, (figure 7). The right ball bearing is housed in the gearbox side 22, (figure 6). The shaft 31, drives a multi-vee belt pulley 21. Pulley 21 drives multi-vee belt 23, which drives large pulley 25. Pulley 25 drives cutter block 26.

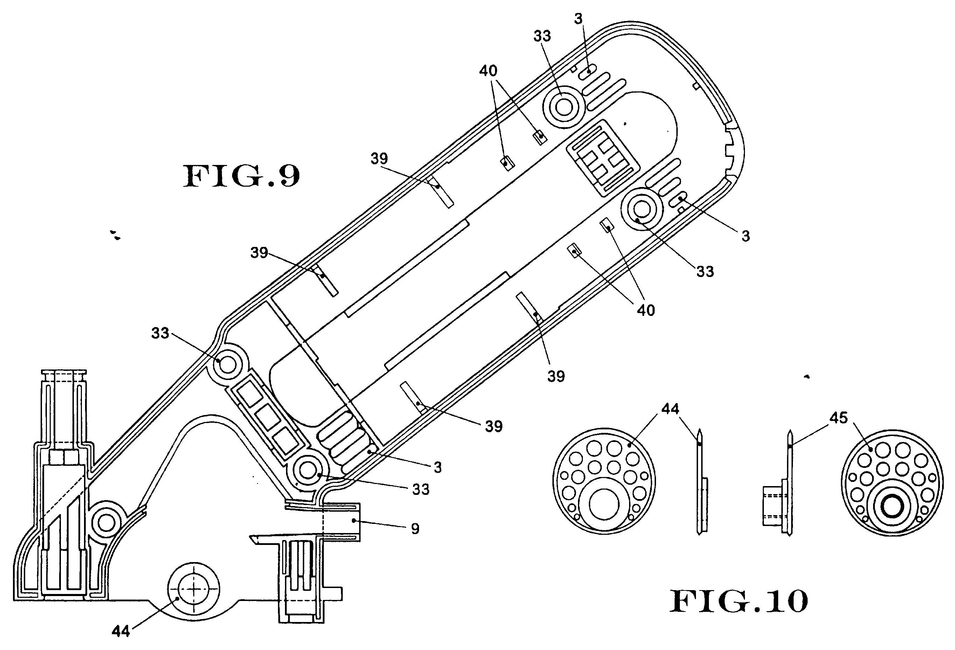

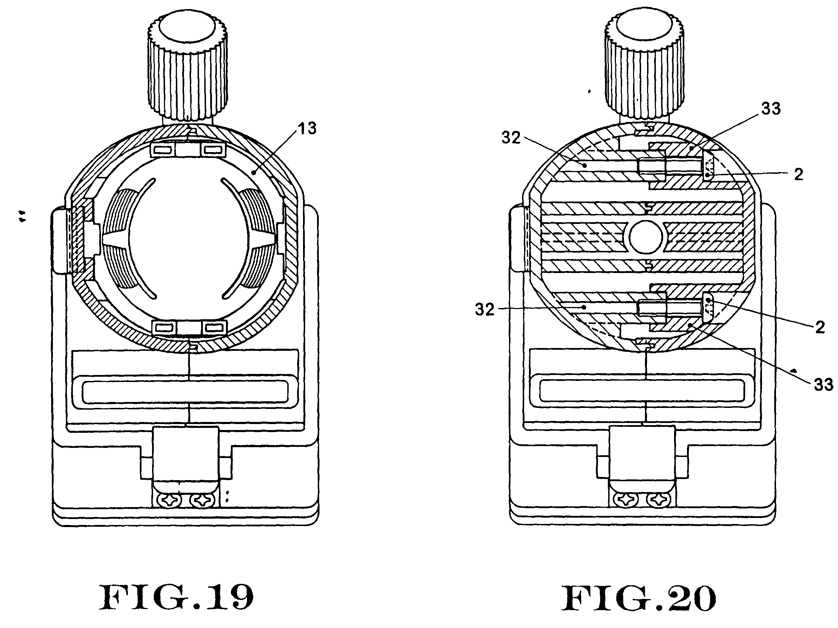

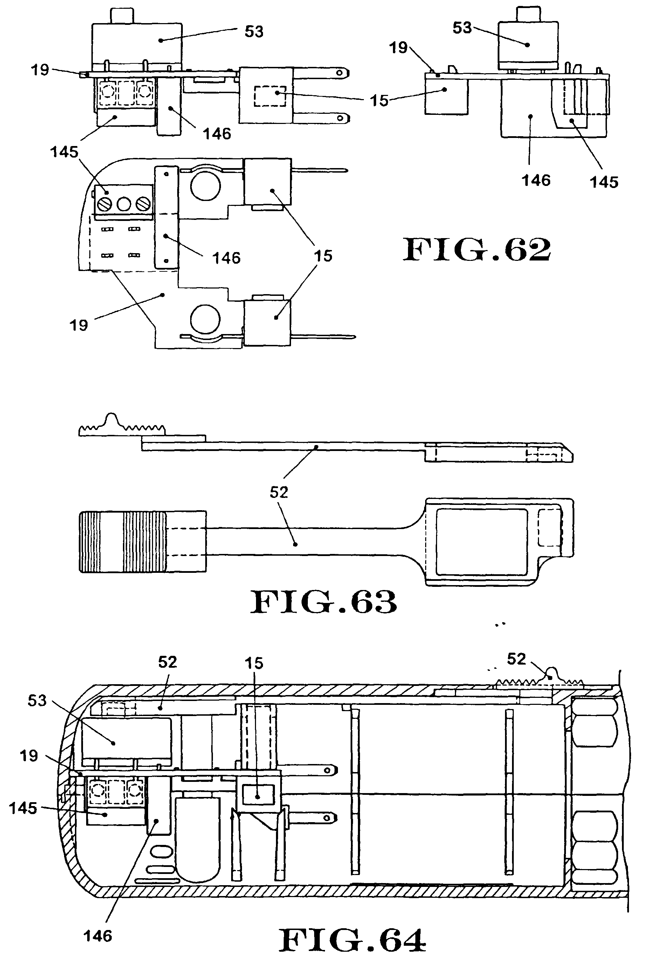

Figures 7 and 9 show the injection moulded main case sides. The main case screws 2, screw into posts 32, (figure 7) through posts 33 (figure 9). This is shown in detail in figure 20. 37 is the mounting for the cable strain relief 4. 36 is the cable clamp. The motor field winding is held in place on supports 39. There is a raised lip 34 (figure 7), which fits into groove 35 (figure 9), which runs around the edge of the case mouldings. This is both for location and to lengthen the path of electrical insulation. Posts 40, support the brush assemblies 15. This is shown in detail in figure 64. The ridge 38, in the case side (figure 7) mates with the ridge 38, moulded into the gearbox case 22 (figure 8), to entrap the bevel gear lubricant. The gearbox side 22 (figure 8) is attached to the case side (figure 7) using three screws 41. Exact location is made by posts 42, fitting into holes 43 in a similar way to the main case fixings (figure 20).

Figure 10 shows front and side views of the output shaft mounts. 44 is the right mount, 45 is the left mount. The mounts are made from steel and are moulded into the main case sides 1. They have perforated bases, which allows the plastic on either side to fuse together during moulding. They can be seen in situation in figures 7, 9 and 14.

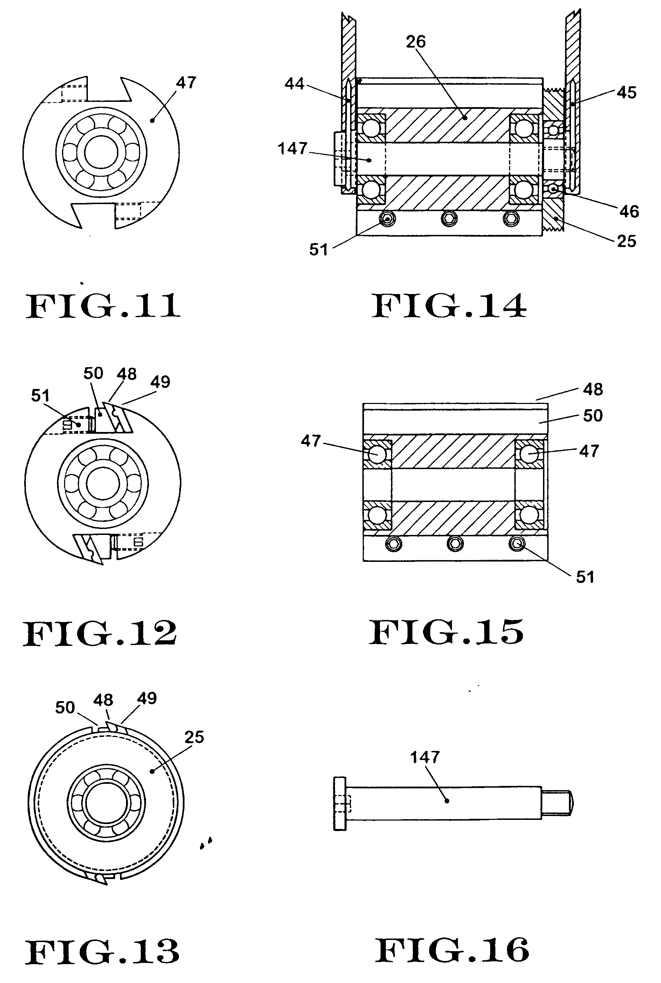

In figure 14 the driven pulley 25 (also in figures 6), has a deep groove ball bearing 46 pressed into its hub. The ball bearing is pressed onto output shaft bracket 45. A variety of different cutting blocks can be used. In figure 14 the planer cutting head 26, is fitted. It is secured in place with the retaining bolt 147 (figure 16), which goes through bracket 44 and screws into bracket 45. When tightened the bolt 147, forces the cutting head into the pulley 25, creating a friction coupling.

Figure 11 shows an end view of the planer cutting head with only its bearings 47, fitted. Figure 12 shows an end view of the planer cutting head with the reversible blades 48, the steel backing bars 49, the clamping bar 50, and the set screws 51 also fitted. Figure 13 is the assembled cutting head shown in figure 12 with the pulley 25 fitted. Figure 15 shows a side view of the assembled cutting head.

Figure 17 shows a rear view of the tool. 37 is the electric cable entry. 9 is the dust extract nozzle. 10 is the guard retaining clip and 8 is the guard.

Figure 18 is a rear view with the handle sectioned through the rear intake vents 3. The switch actuator arm 52, can be seen contacting the switch 53. Figure 64 shows a sectional side view of the handle. This diagram shows how the switch actuator arm 52, operates the switch to turn the tool on. The actuator arm 52, is shown separately in figure 63.

The printed circuit board 19 (figures 62,64 and 5) Provides mechanical support and electrical connection to the incoming supply cable connector 145, the suppression capacitor 146, the switch 53, the brush holders 15 and the motor 13. 36 is the incoming supply cable clamp.

A rear view sectioned through the motor 13, can be seen in figure 19.

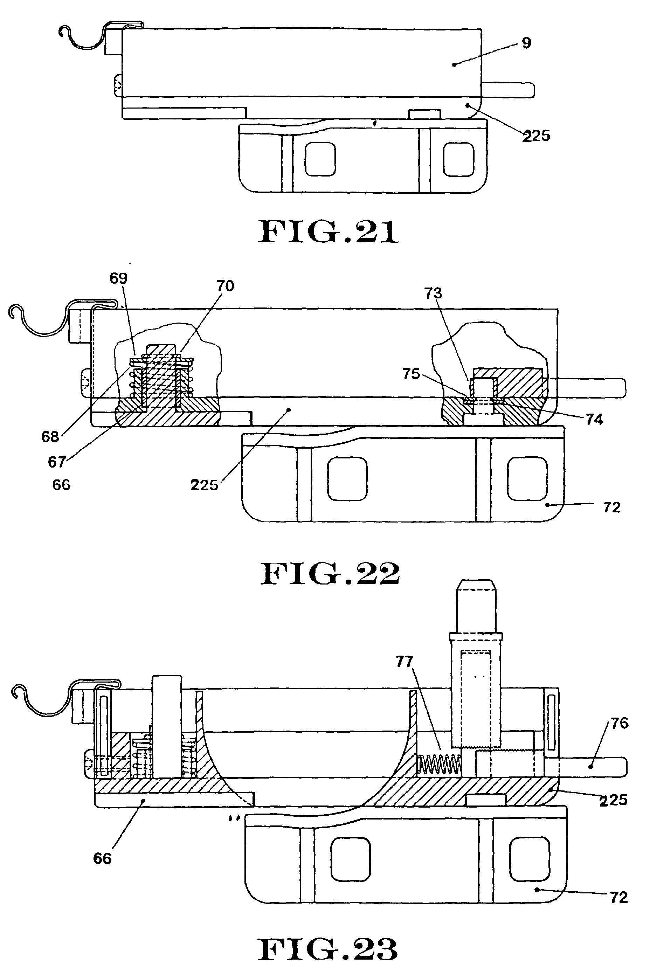

An outside view of the general purpose planer guard is shown in figure 21. This guard serves three purposes. The first purpose is to cover moving parts to prevent injury to the operator. The second is to provide a plunge action, whereby the operator can rest the base plate of the tool, when switched on, onto the work surface without cutting it. This gives the operator greater control. The third purpose is to give lateral support so that the base plate cannot slip off the work piece, and is held so the work piece remains centralised about the centre line of the cutting head.

The following parts can be seen assembled in figures 5 and 6.

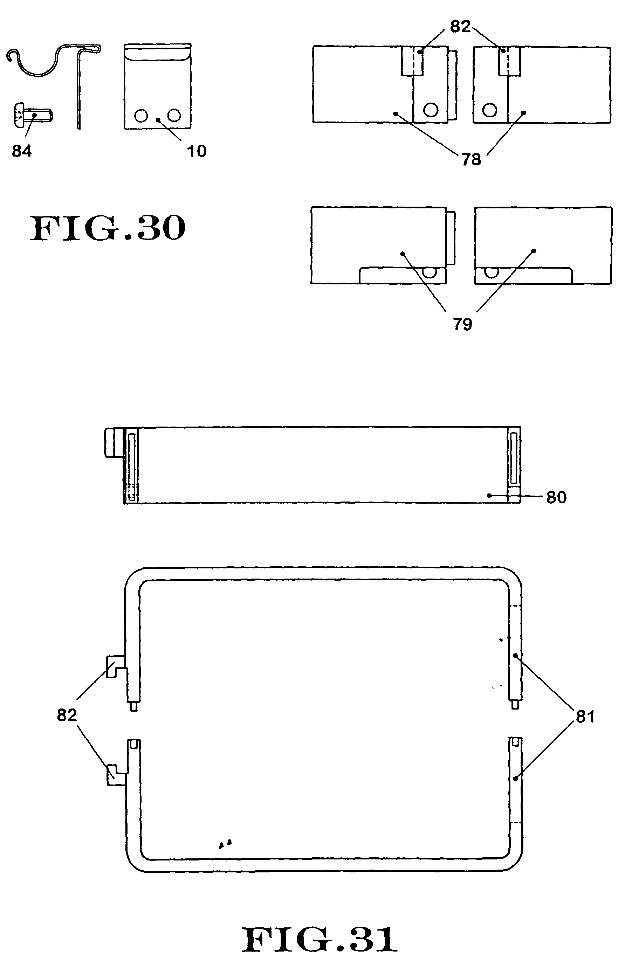

The blades are protected by the plunge action of the guard, which is biased to cover them. The sides of the guard are covered with two plastic mouldings (figure 31). 81 shows a plan view of the mouldings. 80 shows an inside, side view of the left side moulding. 79 shows a front view and 78 shows a rear view. Spigots 82 prevents the retaining clip 83, being bent beyond its limit of elasticity. The retaining clip 10 is fastened, through the side mouldings into the base plate 225, with two screws 84.

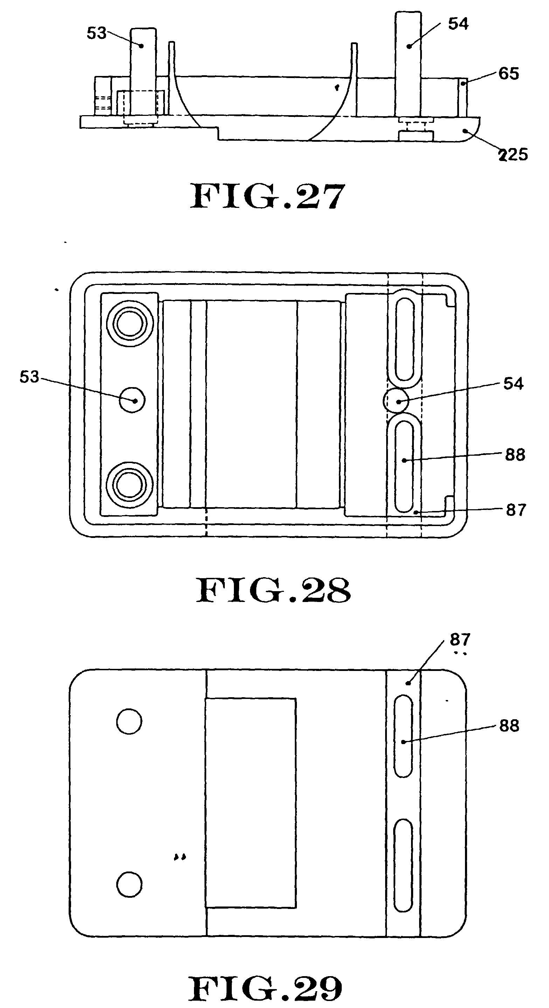

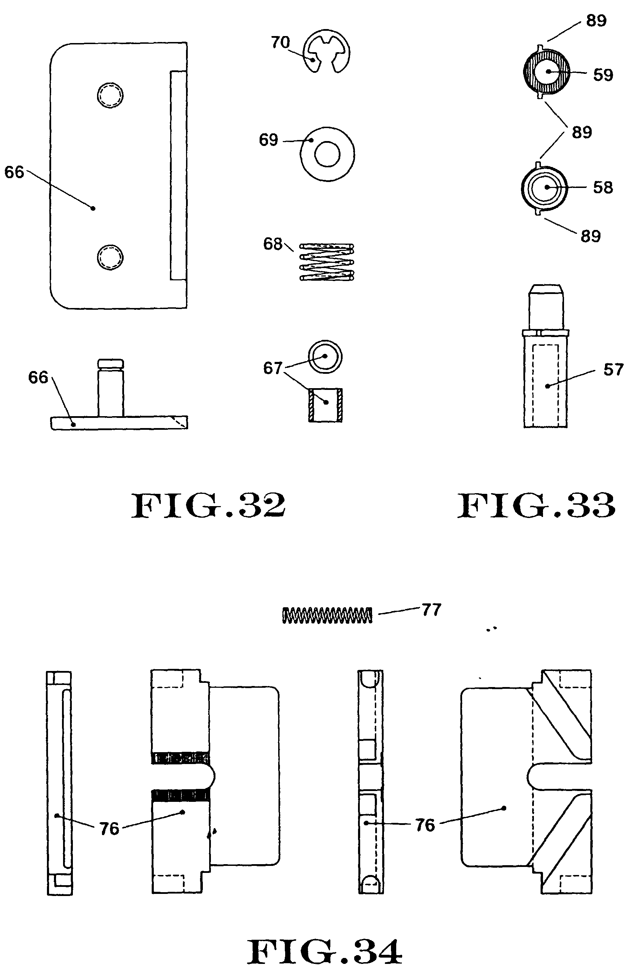

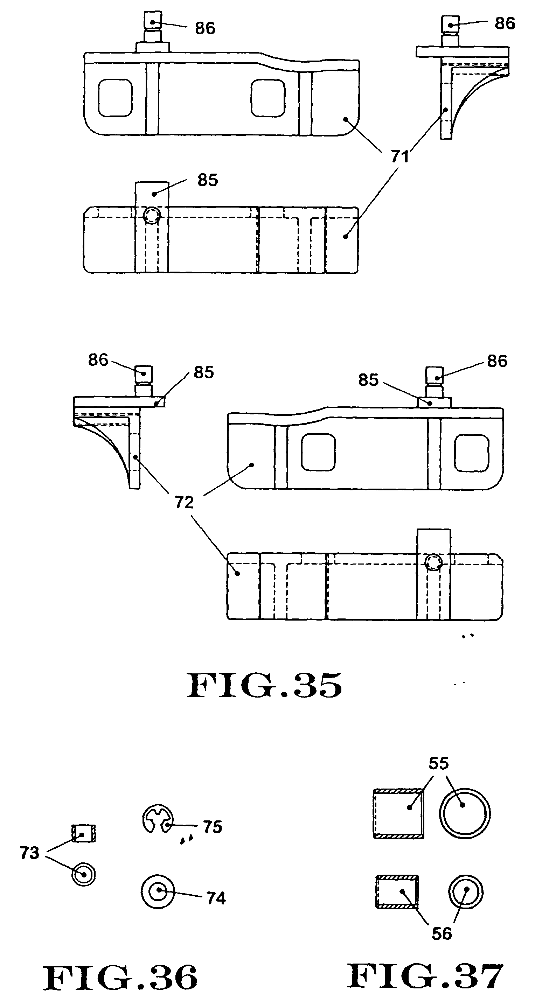

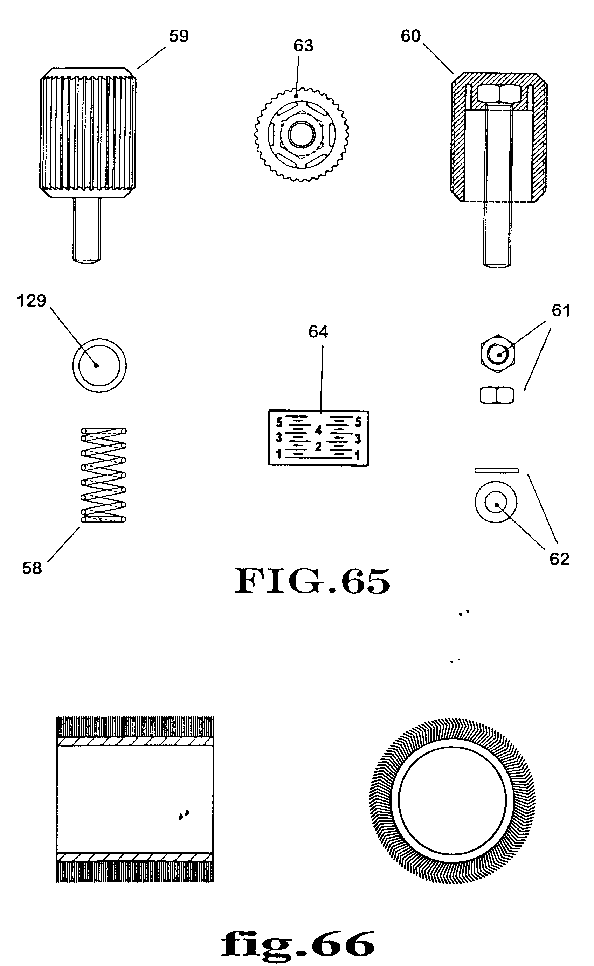

The plunge action operates on front guide post 54, and rear guide post 53, most clearly seen in the side view of the base plate casting 225 (figure 27). The front guide post 54, fits into the slider clamp (shown in figure 33), which fits into the dry self lubricating plastic slider bearing 55 (shown in figure 37). The bearing 55, is housed in the main case. The rear guide post 53, slides directly in the dry self lubricating slider bearing 56, (figure 37) which is housed in the main case. Spring 58, (figure 65) provides a biasing force.

The depth stop 6, (figures 5 and 6) which acts on the slider clamp 57 controls the amount of travel of the guard. The depth stop control knob is a standard machine screw with a cap moulded to its head. It can be seen in figure 65. 59 is an external view. 60 is a sectional view and 63 is an underneath view. Nut 61 is captive in the main case allowing the depth stop to be adjusted. The depth setting can be read from where the control knob covers the depth scale 64. When the planer guard is fitted the maximum depth of cut is restricted to 1.5 millimetres by the height of projection 65 (figure 27). The reason that the depth scale 64, is marked from zero to five millimetres is shown later in this text. 129 in figure 65 is a rubber seal which prevents vibration movement of the depth stop control knob 6.

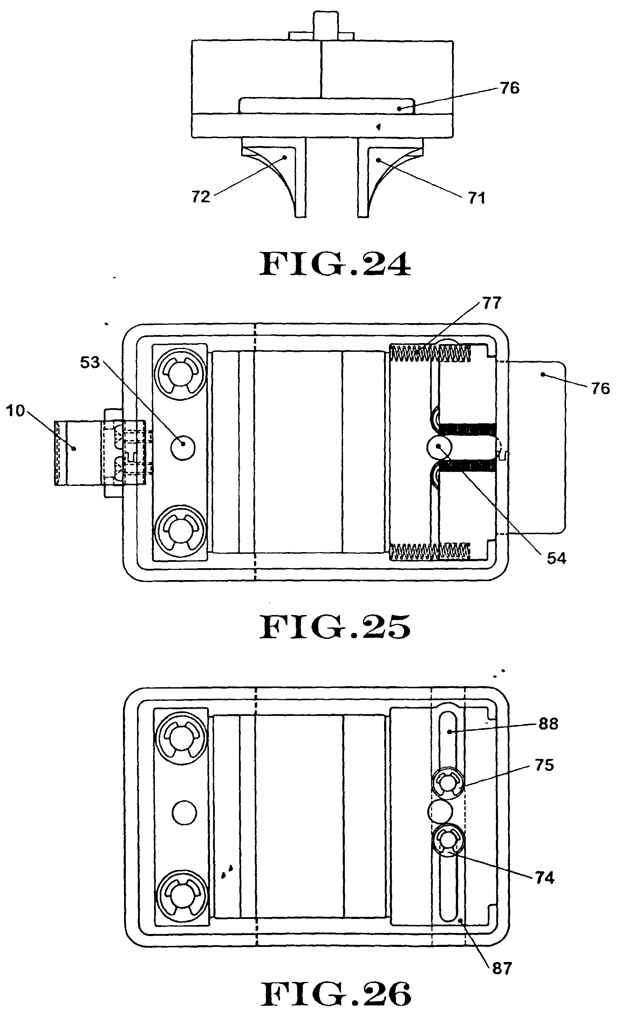

Lateral movement is restricted by the operation of fences 71 and 72 (figure 35 and figures 21 to 26). The fences have bearing surfaces 85, which run in slots 87 in base plate 225. Posts 86 protrude through the base plate slots 88, and dry self-lubricating washers 74 (figure 36) fit over the posts and are clamped in place with retaining clips 75. The retaining clips also hold the fences 71 and 72 in place. Dry self-lubricating bearings 73, fit over the posts 86. A plan view can be seen in figure 26. Plunger 76 (figure 34) has two angled slots in which bearings 73 run. The plunger is biased to maximum protrusion with two springs 77. Before starting the cut, the front of the tool is pressed onto the edge of the work piece, depressing the plunger. This opens the fences 71 and 72 to their maximum width. The tool is then lifted up so that the plunger 76, returns and the base plate 225, rides up the chamfer on its front edge until its base is resting on the work piece. The fences close onto the sides of the work piece during this last operation. The handle of the tool is then pressed to plunge the cutter into the work piece. This causes the serration's on the slider clamp 57, to engage with the serration's on the plunger 76, locking the fences 71 and 72 in place whilst the cut is being made. The slider clamp 57, is shown in figure 33. 59 is the underneath view showing the serration's. 58 is the plan view. Rotational movement is prevented by lugs 89, which locate into the main case sides 1.

The fences 71 and 72 do not close fully. The reason for this is that the fences would need to be much wider, so that their outside edges covered the outside of the cutters 48, when the tool is being used on thin materials. If the fences were much wider, they would stick out excessively to the left and right side of the tool, when cutting wide materials. The plunger 76, and the front of the base plate 225, would also require lengthening, making the tool more cumbersome.

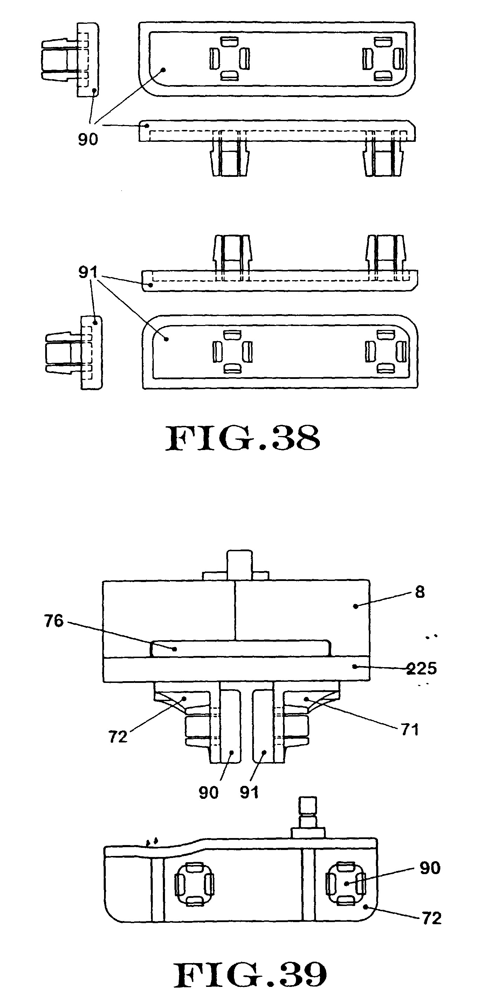

Plastic adapters are provided to allow thin materials to be clamped successfully. In figure 38, 90 shows three views of the right side thin material adapter and 91 shows three views of the left thin material adapter. The adapters 90 and 91,have integrally moulded tabs so installation and removal takes seconds. They can be seen fitted in figure 39.

For the tool to operate correctly as a planer, there must be a plate behind the cutting blade at the same height. Having a separate sole plate 66 (figure 32), solves this problem. Looking also at figure 22, the sole plate can slide through the base plate 225, in two dry, self-lubricating plastic bearings 67. Two springs 68, held in place by washers 69 and retaining clips 70, bias the sole plate to touch the base plate. During the process of depressing the guard, the tip of the post on the sole plate 66, will make contact with the base of the main case 1, with the sole plate in line with the lower edge of the planer blade, thus preventing the sole plate from further movement. The base plate 225, can continue its movement until its depth setting is reached.

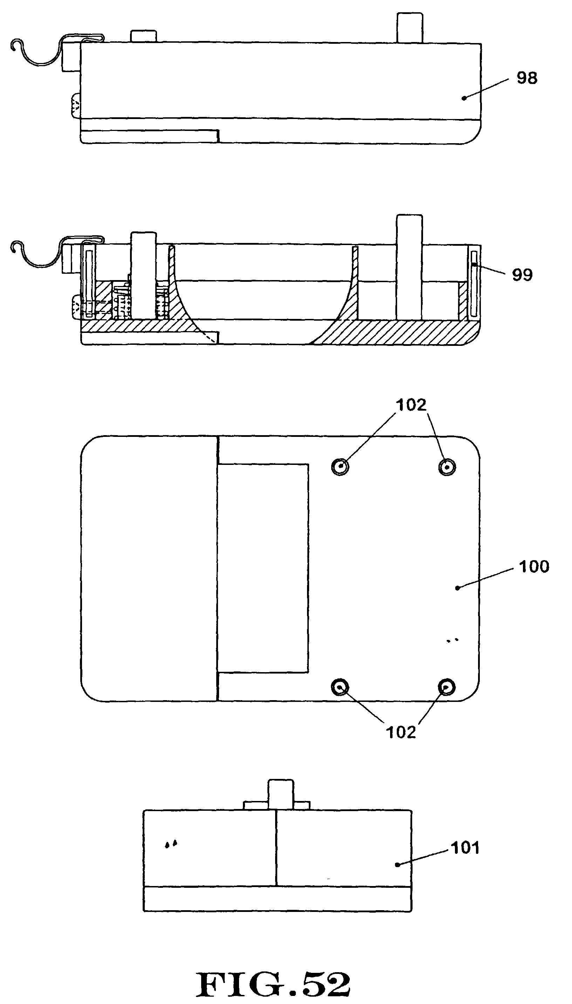

Figure 52 shows the plain planer guard. 98 is an outside side view. 99 is a sectional side view. 100 is a view of its base plate from underneath and 101 is a front view. Instead of having fences and a plunger (71, 72 and 76) this guard has four tapped holes 102, in its base plate. This guard is more suitable for use by the experienced user as it offers less protection when cutting. This guard is either used on its own, in awkward situations where the general purpose guard will not fit, or with a variety of fences. The fences are attached, with bolts to the four holes 102.

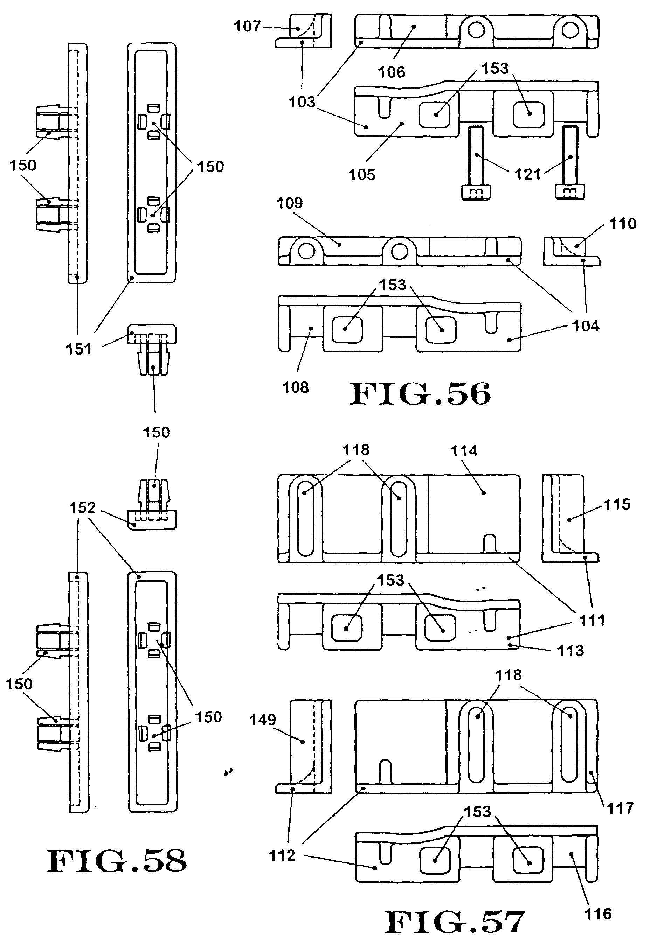

Figure 56 shows the fixed fences; where 103 is the right fence with 105 being a side view, 106 an underneath view and 103 a front view. 104 is the left fence, with 108 being a side view, 109 an underneath view and 110 a front view. They are attached using fixing bolts 121. These fences are used when a little lateral support is required.

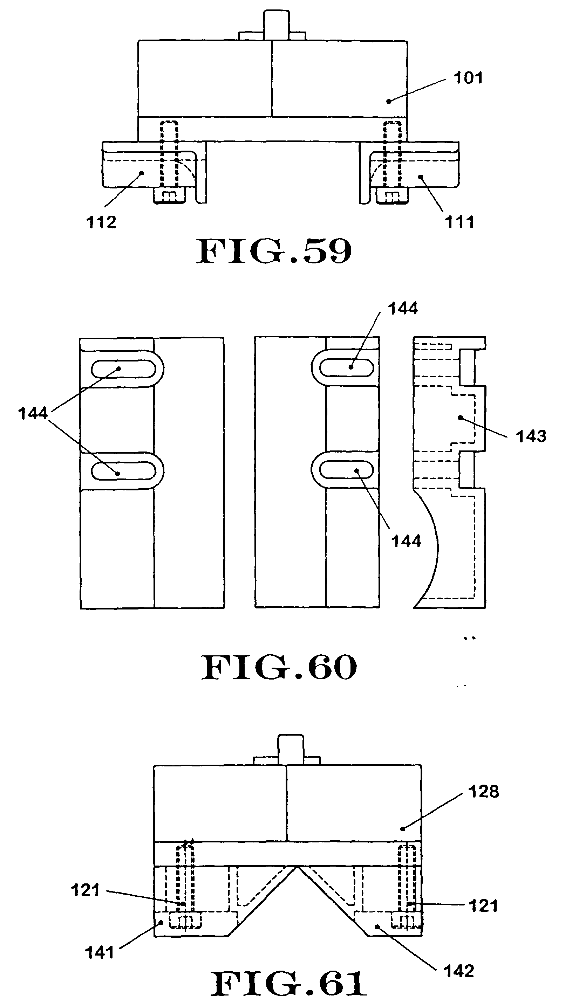

The fences shown in figure 57 differ in that they are adjustable. Instead of bolt holes, they have slots 118. 111 is the left fence, where 113 is a side view, 114 an underneath view and 115 a front view. 112 is the left fence, where 117 is a side view, 116 an underneath view and 149 a front view. These fences can be used where offsetting is required, or a lot of material with the same width requires planing. Figure 59 shows a front view of the guard 101, with the adjustable fences fitted.

Similar hinged fences (not shown) can also be attached for cutting bevels.

Left and right thin material adapters, similar to 90 and 91(Figure 38) for the above fences are shown in figure 58. 151 is the right adapter and 152 is the left adapter. Lugs 150 fit in holes 153 in the fences (figure 56 and 57).

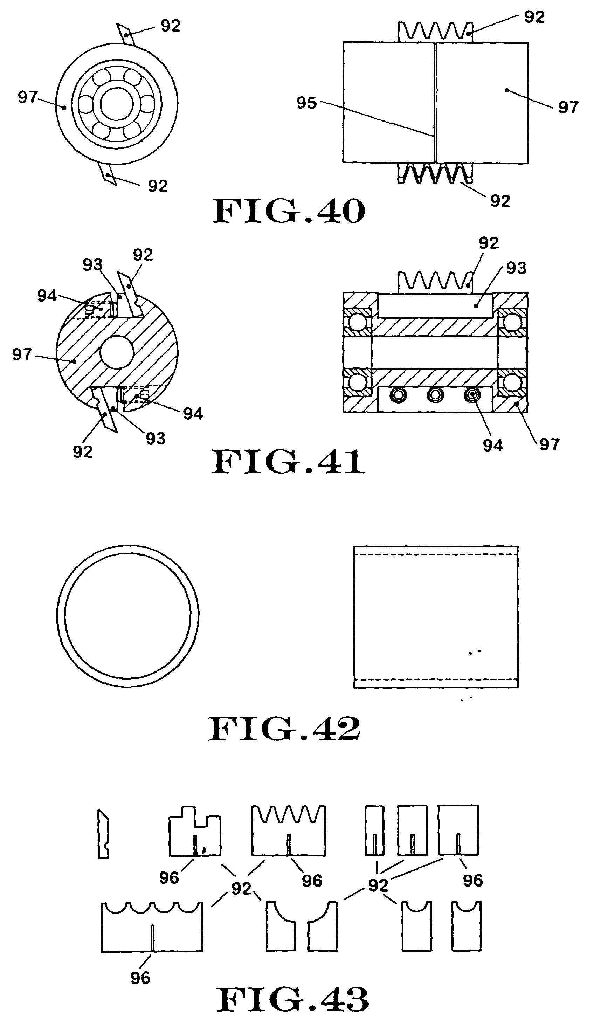

Figure 40 shows an end and a side view, of an assembled moulding cutter block 97. This can quickly and easily replace the planer cutting block. Sectional end and side views are shown in figure 41 where 92 is the cutter, 93 is the clamping strip and 94 are the clamping set screws. 95 is an indentation marking the centre line of the cutter. 96 are lines marking the centre of the cutters. These are used to set the cutters centrally, or provide reference lines to measure an offset. A plastic tube, which is a sliding fit over the moulding block 97, is shown in figure 42. This tube simplifies setting the second cutter to the same lateral position as the first. Once the first cutter has been set and locked in position, the tube (figure 42) is slid over the moulding block 97 until it makes contact with it. The second cutter is then positioned so that it touches the tube.

A small selection of possible cutters is shown in figure 43. These are the types known as; tongue and groove, finger joint, multi-bead, rounding over and single bead cutters. Some other popular types of cutter that could be adapted to this tool are; Ovolo, Ogee, vee and dovetail.

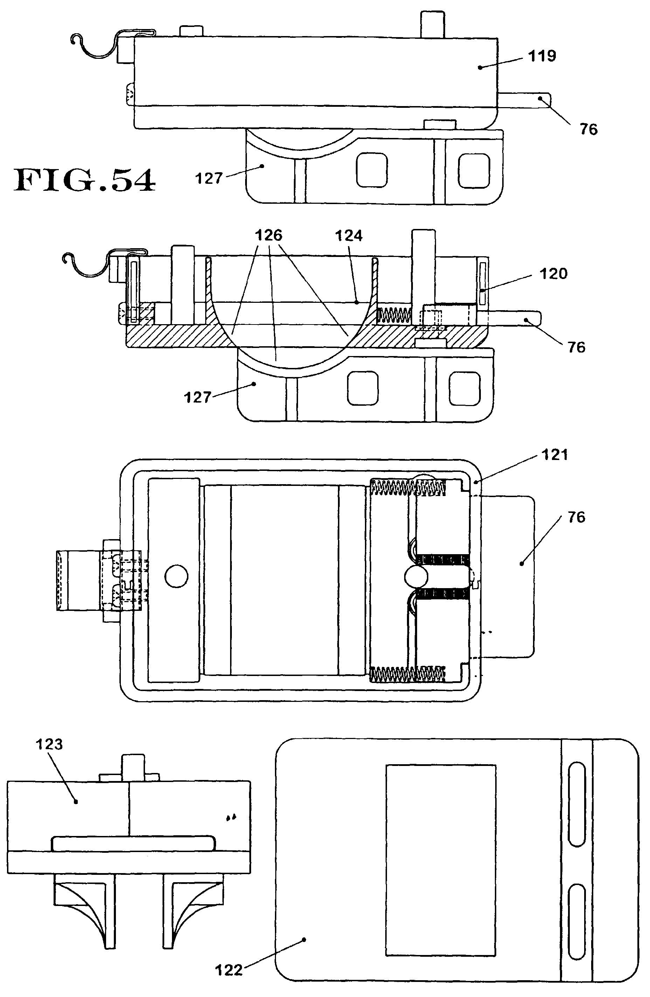

When using the moulding block (figure 40), different guards are required. The general purpose moulding guard is shown in figure 54; where 119 is a side view, 120 is a sectional side view, 121 is a plan view, 122 is an underneath view and 123 is a front view. This guard differs from the general purpose planer guard 9, in four ways. It does not have a separate sole plate 66. For correct operation the base plate needs to be flat. The ridge height 124, is lower, allowing a greater depth of cut. The curved sections covering the blades, and the fences 126 are shaped differently to allow for this. The thin material adapters (not shown) are also re-shaped. The operation of the fences 127, is the same as the planer general purpose guard. This feature is particularly useful as it provides exact alignment when making repeat cuts. Exact alignment is essential as several cuts are nearly always required to produce a moulded edge.

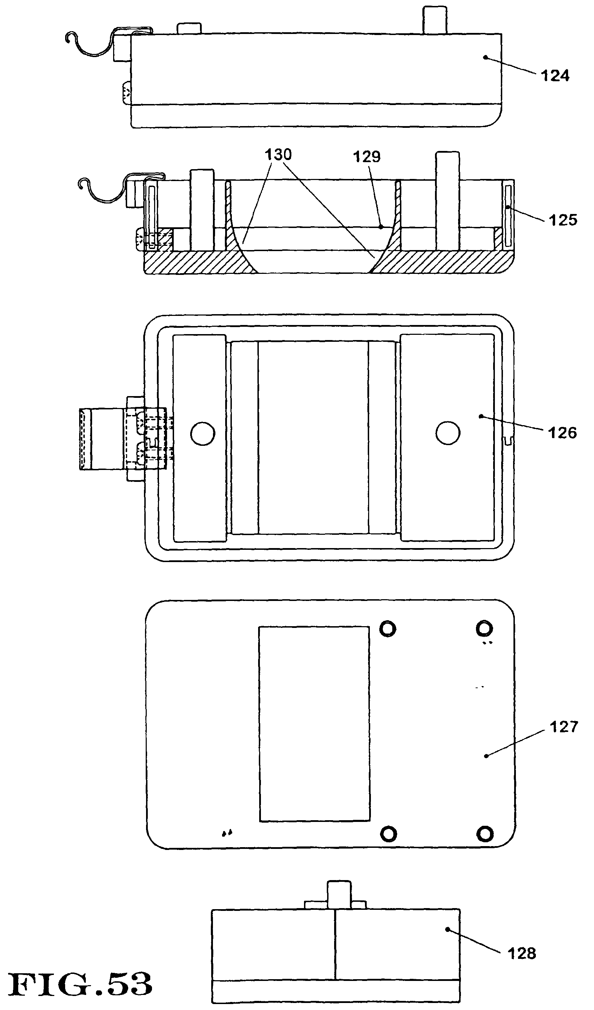

The plain moulding guard is shown in figure 53; where 124 is a side view, 125 is a sectional side view, 126 is a plan view, 127 is an underneath view and 128 is a front view. This guard differs from the general purpose moulding guard, figure 54, by having tapped holes in the base plate 127, instead of plunger operated fences like the plain planer guard (figure 52). This guard can also use fences similar to 71 and 72 in figure 35, and hinged fences (not shown). This allows for eccentric and angled cutting.

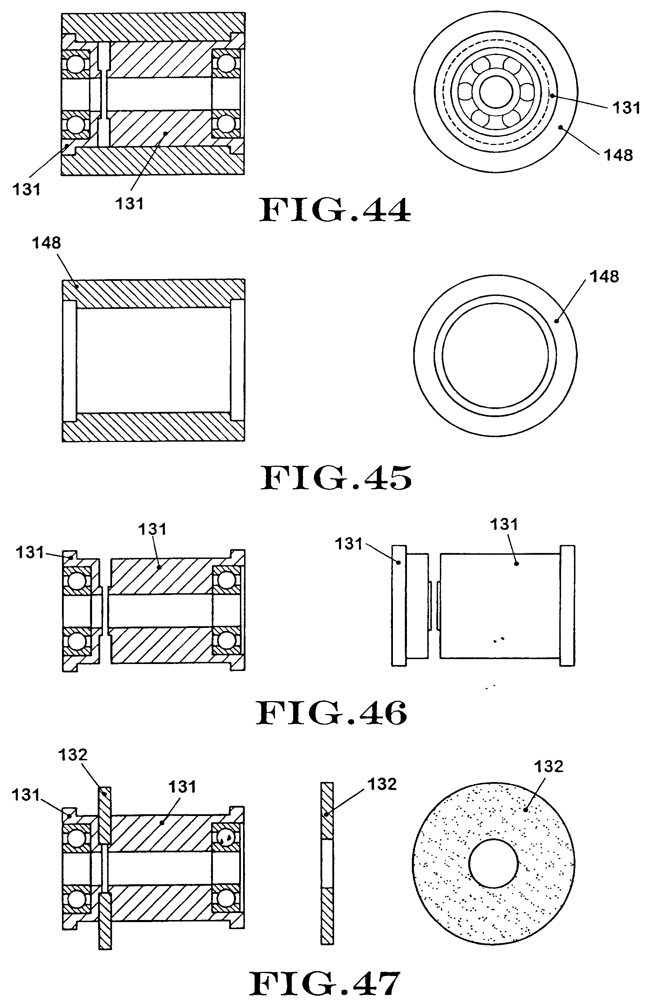

Figure 44 shows an end, and a side view, of an assembled grinding block. This can quickly and easily replace any other block. Figure 45 is a sectional side, and end view of a grinding wheel. Figure 46 shows a side and a sectional side view of the grinding block on its own. The grinding block 131, is made in two parts so it clamps the grinding wheel 148, when tightened in situation. When using the grinding block any of the four previously described guards can be used. The planer guards are used on edges where accurate amounts of material are to be removed and/or a good finish is required. The moulder guards are used on edges or faces, for quick material removal or de-rusting. The guards can use any of the fence combinations previously described when grinding.

The grinding block (figure 46), can also be used with an abrasive cutting disc, 132 in figure 47. The cutting disc is held tightly in place between the two parts of the block when it is clamped into the main case 1. A separate guard is required when using the cutting disc 132.

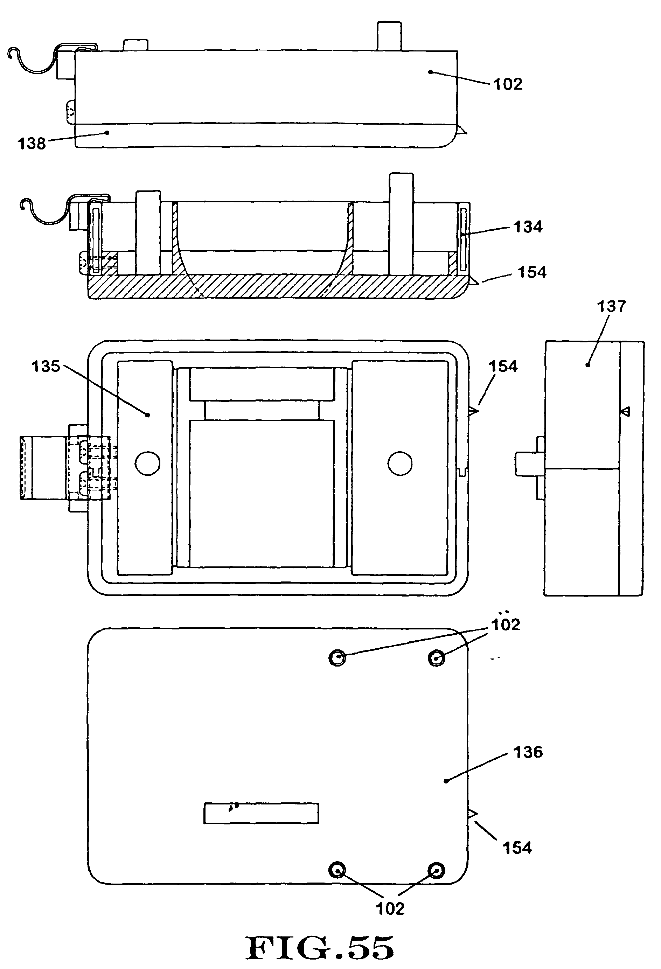

The cutting disc guard is shown in figure 55; where 133 is a side view, 134 is a sectional side view, 135 is a plan view, 136 is an underneath view and 137 is a front view. This guard differs from the plain moulder guard, figure 53, by having a smaller slot in the base plate 136. A pointer 154, is also required to indicate the line of cut.

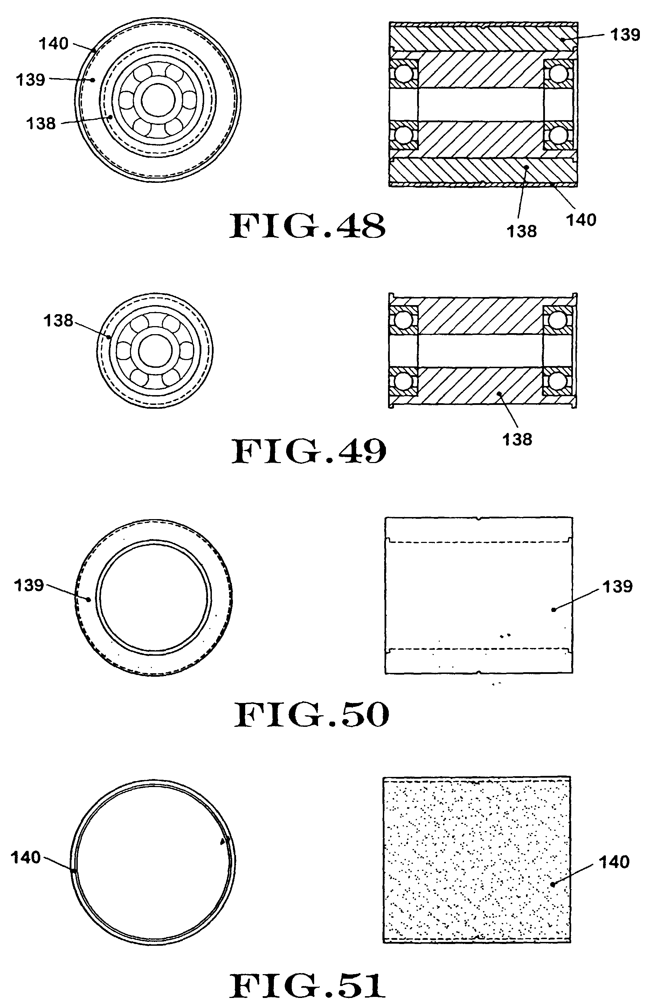

Another type of block is the drum-sanding block. Figure 48 shows an end view and a sectional side view of an assembled drum-sanding block. Figure 49 shows an end view and a sectional side view of the metal block with integral bearings 138. Figure 50 shows the rubber backing block 139. Figure 51 shows an abrasive sanding drum 140. Like when using the grinding block (figure 44) any of the four previously described guards can be used. The planer guards are used with a hand rubber backing block 139, and on edges where accurate amounts of material are to be removed and/or a good finish is required. The moulder guards are used with a softer rubber backing block 139, and on edges or faces, for quick material removal or de-rusting. The guards can use any of the fence combinations previously described when sanding.

A wire brush attachment (Figure 66) also fits onto the grinding block (Figure 46) and is clamped in the same way as the grinding wheel.

Another type of fence that will fit the plain planer or plain moulding fences (figures 52 and 53), is the longitudinal vee-block attachment figure 60. This fence comes in two parts: 141 is a plan view of the right side. 142 is a plan view of the left side. 143 shows a side view. A front view of the vee-block attachment bolted to the plain moulding guard 128, is shown in figure 61. Slots 144 provide lateral adjustment. The main use is for bevelling or moulding at 45 degrees, though it can also be used for cutting pipes longitudinally.

The ideal no load speed of all the above mentioned cutting blocks is in the range of 9000 to 11000 revolutions per minute.

It is easily possible for a designer in the field to combine all of the above guards into one or two multi-purpose guards.

This invention has certain benefits over the prior art.

Comparing the tool to non-powered planes, it is more like the type known as a block plane, than a smoothing plane, with similar advantages. Like the block plane it is small, light weight and can be operated with one hand. It also works well in tight situations and at awkward angles, even at arms length. The small base plate makes planing end grain easier.

The protected blades, the light weight and the lateral locating, make the tool more suitable for amateurs, and people with weak hands, as well as making it safer to use for all operators.
Time is saved as less clamping is required because one hand is free to hold the work piece.

When comparing the tool described in the text with a router, it has the same advantages as when it is used as a planer:

It is smaller, weighs less, it is operated with only one hand, requires less skill, less strength, less clamping and is much safer.

Additional advantages are:

The cutters and the depth of cut are easier and quicker to set.

When the general purpose guard is being used, there is almost instant, automatic positioning, giving little likelihood of misalignment of the subsequent deeper cuts ruining the moulding, as with conventional routers.

When grinding, the tool has several advantages over angle grinders:

The protected abrasive grinding wheel makes it safer.

The tool is easier to use with one hand because of; the handle position, the base plate, the fences, the direction of the grinding wheel and the plunge action.

The sole plate to the rear, and the adjustable base plate at the front; give the following advantages when using the abrasive grinding wheel or drum sander: A set amount of material can be removed, evenly, across the whole width and length of the cut leaving a flat square surface. This allows the tool to be used for accurately finish off cut edges. It also means flat surfaces can be cleaned, de-rusted or sanded without causing excessive damage.

The enclosed guard around the wire brush attachment means that the tool poses less risk from flying strands than when a wire brush is used on an angle grinder.

It is much easier to use on surfaces, because there is no sideways torque due to the brush position, direction of rotation and base plate.

As the tool is multi-purpose, it replaces several tools, resulting in cost and space saving. Operators who use tools at a separate location to where they are stored, will save time and effort as well. The time taken to convert the tool to a different operation, is no longer than it would take to remove a single function tool from a cupboard, unwrap the cable and plug it into the supply.

Some further details of the function changing aspect of the tool and the operation in these functions will now be provided.

Changing the function of the tool is very quick and simple.

Referring to Figure 1 in the accompanying drawings, spring clip 10, is operated with one finger and the guard 8, is slid off. Referring now to Figure 14, shoulder screw 147, is removed and the planing block 26, drops out. The final drive pulley 25, remains in place on its own bearing and support. A different function cutter block is then inserted the screw replaced and a different guard slid on.

The operation of the tool in various modes will now be further described.

When the planer block is utilised there are two different guards that can be used. The general purpose guard can be seen in Figures 21 to 39.

Both guards have base plates, which act in the same way as conventional hand-operated electric planers. In addition they have a plunge action, which results in improved control as the tool can be placed on and supported by the work piece before the cutting starts. It also provides protection from the rotating blades.

During the plunge action the rear sole plate 66, stops when it reaches the same height as the planer blades. The rest of the base plate 25, can continue to move until it reaches the set depth.

The general purpose guard has an additional feature. Lateral movement is restricted by the operation of fences 71 and 72 (Figure 35 and Figures 21 to 26). Before starting the cut, the front of the tool if pressed onto the edge of the work piece, depressing the plunger 76. This opens the fences to their maximum width. The tool if then lifted up so that the plunger returns, and the base plate 25, rides up the chamfer on its front edge until its base is resting on the work piece. The fences close onto the sides of the work piece during the last operation. The handle of the tool is then pressed to plunge the cutter into the work piece. This causes the serration's on the slider clamp 57, to engage with the serration's on the plunger, locking the fences in place whilst the cut is being made.

When the moulding block is fitted (Figure 40 and 41) the tool cuts more like a saw bench with a moulding head rather than a router. It can cut straight or convex edges.

It is envisaged that the tool can be supplied in a number of different forms. At its simplest the tool can be configured as a single purpose tool with the appropriate tool bit provided. A range of such tools can be manufactured. A more sophisticated version provides a basic tool body to which a range of different tool heads can be fitted. The tool user would simply purchase the basic tool body and whichever of the range of tool heads required. Additional tool heads could easily be purchased at a later date if it was desired to extend the use of the tool.

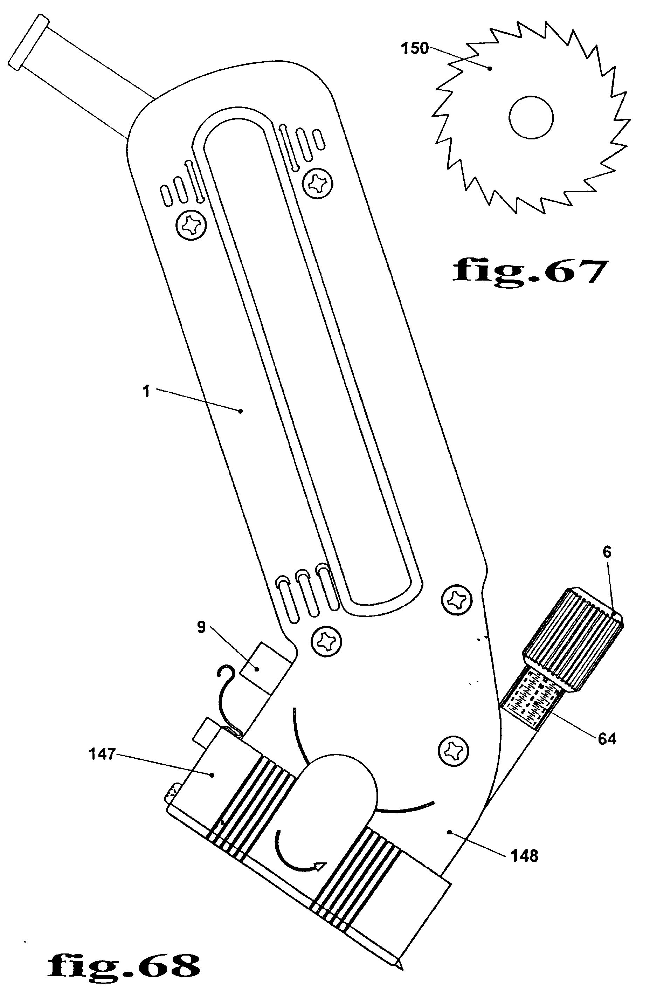

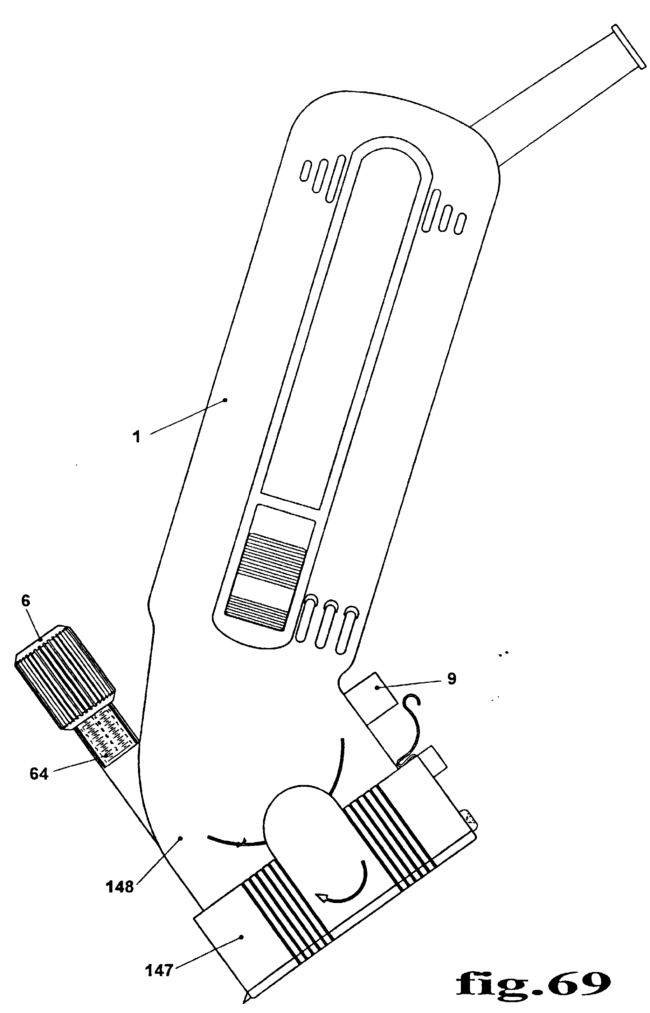

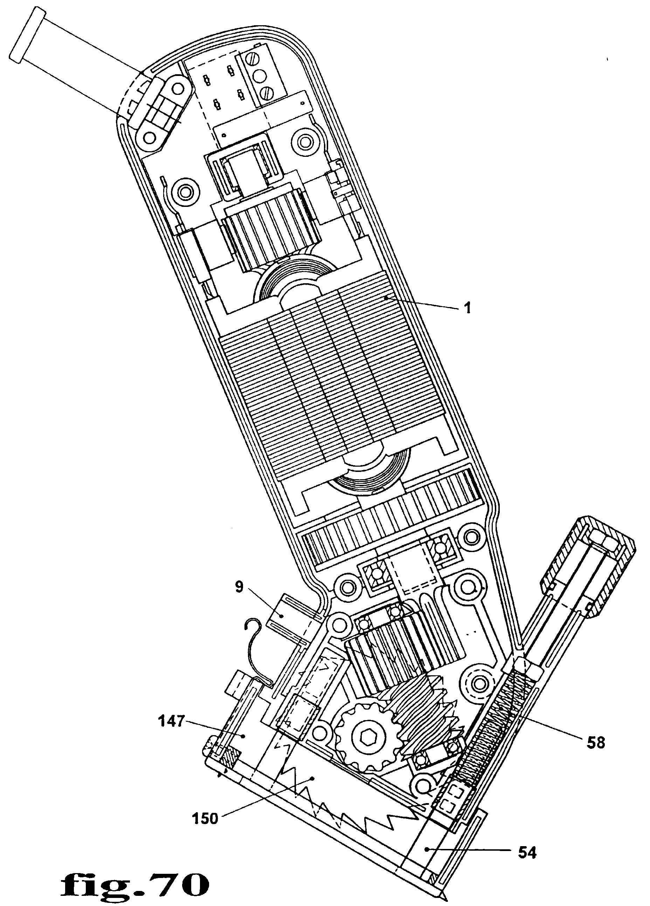

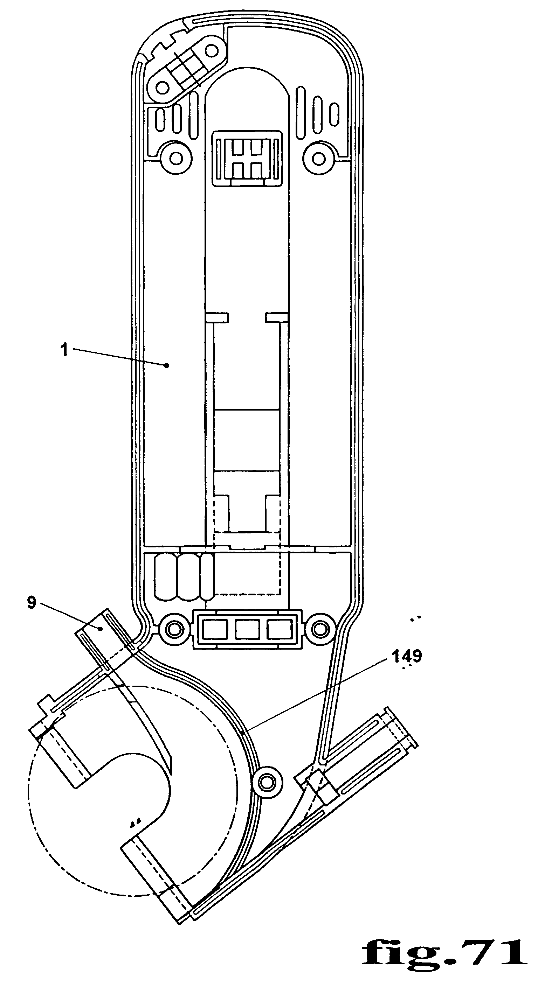

Figures 68 to 71 show a further version of the tool, which is designed to be used with a small circular saw blade (Figure 67) or an abrasive disk. Figure 68 shows a right side view. Figure 69 shows a left side view. Figure 70 shows a sectional right side view of Figure 71 shows a left hand case moulding.

This example has a smaller guard and base plate, 147. The handle part of the case moulding is identical, but the front part that encapsulates the blade is also smaller, 148.

This tool is similar to the one disclosed in European Patent Application Number 95934753.5. It differs in that is has five novel features which improve the design. All of these have been disclosed previously in this Application, and are summarised below.

A gripping means is provided which, when fitted, consists of two fences that grip the workpiece. The fences can be moved apart to fit round the workpiece and then brought together to grip the workpiece simply by moving the tool against the workpiece, without requiring the operator to move their fingers. Furthermore, the fences can be locked in place simply by the action of plunging the tool towards the workpiece.

There is a dust collection/directing facility, in which the cutting debris is expelled through nozzle 9. It may be collected using a bag or conventional suction collector. Guides 149, moulded into the main case, are shaped to improve the flow of debris out of the nozzle.

The depth of cut is indicated on a scale 64. The set depth can be read without the guard being depressed and the blade exposed.

The biasing device 58, acts on the front half of the guard, in this example on the front guide post 54. This prevents jamming when a cut is started with the rear of the guard overhanging the work piece.

An auxiliary handle, which may be detachable, could be provided at the front of the tool, to assist operators with weaker hands.

It should indeed be noted that these five individual differences might be provided separately or in different combinations and might be provided on a non-multipurpose tool similar to that disclosed in EP95934753.5.

Further modifications and improvements may be incorporated without departing from the scope of the invention herein intended.

## Claims

1. A hand operated power tool for performing operations on a workpiece; the tool being suitable for use with one hand; the tool comprising a handle, a motor, a sole plate and a mounting means for drivably attaching a tool bit; the handle extending from a mounting means and being disposed at an acute angle to a sole plate; characterized in that the mounting means is arranged to receive any one of a range of interchangeable tool bits configured for different tasks.

2. A hand operated power tool as claimed in Claim 1 wherein the range of interchangeable tool bits comprises bits configured to operate as planers, moulders, grinders, abrasive disk cutters, drum sanders and wire brushes.

3. A hand operated power tool as claimed in Claim 1 or Claim 2 wherein the sole plate is movable on the power tool between a first position in which the tool bit extends beyond the plane defined by the working surface of the sole plate in operation and a second position in which the tool bit does not extend beyond the plane defined by the working surface of the sole plate in operation, wherein the sole plate further comprises a means for biasing the sole plate towards the second position, said means for biasing the sole plate being positioned towards the front of the power tool.

4. A hand operated power tool as claimed in Claim 3, wherein the sole plate further comprises a rear section which moves with the front plate except that when the sole plate is moved towards the first position, the rear section will move only until it is level with the tip of the tool bit.

5. A hand operated power tool as claimed in Claim 3 or Claim 4 wherein there is provided a depth adjustment means for adjusting the extent to which the tool bit can extend beyond the working surface of the sole plate in operation; wherein said depth adjustment means is associated with the means for biasing the sole plate.

6. A hand operated power tool as claimed in any preceding Claim further comprising a gripping means for a workpiece, said gripping means comprising two fences, a means for moving the two fences apart in order to accommodate the workpiece and a means for urging the fences to grip the workpiece, wherein the gripping means may be operated by pressing the power tool against the workpiece.

7. A hand operated power tool as claimed in claim 6 wherein the means for moving the two fences apart comprises a plunger that can move in to or out from the tool and which can be moved in by pressing the power tool against the workpiece; and the means for urging the fences to grip the workpiece comprises a means for biasing the plunger by pushing it out; wherein the motion of the plunger is coupled to the motion of the two fences such that inward motion of the plunger moves the fences apart in order to accommodate the workpiece and outwards movement of the plunger moves the fences together in order to grip the workpiece.

8. A hand operated power tool as claimed in Claim 6 or Claim 7 wherein said fences may be locked in place by the action of pressing the power tool down on the workpiece.

9. A hand operated power tool according to any preceding Claim wherein the motor is mounted within the handle.

10. A hand operated power tool according to any preceding Claim further including a dust extraction means.

11. A hand operated power tool according to any preceding Claim further comprising means for attachment of an auxiliary handle to provide additional means of supporting the power tool.
